# EUROPEAN PATENT SPECIFICATION

(11) **EP 3 842 165 B1**
(45) Date of publication and mention of the grant of the patent: **08.05.2024**
(21) Application number: 20216992.6
(22) Date of filing: 23.12.2020
(51) Int. Cl.: B21J 13/03, F16F 15/04, F16F 9/30

(54) **A DEVICE FOR HOT FORGING OF A METAL ARTICLE, IN PARTICULAR A FLANGE, AND A METHOD FOR INSTALLING A DIE HALF INTO SAID DEVICE**
VORRICHTUNG ZUM WARMSCHMIEDEN EINES METALLGEGENSTANDES, INSBESONDERE EINES FLANSCHES, UND VERFAHREN ZUM EINSETZEN EINER FORMHÄLFTE IN DIE VORRICHTUNG
DISPOSITIF DE FORGEAGE À CHAUD D'UN ARTICLE MÉTALLIQUE, NOTAMMENT D'UNE BRIDE, ET PROCÉDÉ D'INSTALLATION D'UNE DEMI-MATRICE DANS LEDIT DISPOSITIF

(30) Priority: 24.12.2019 BE 201905978
(43) Date of publication of application: 30.06.2021
(73) Proprietor: Hertecant Flanges, 2260 Westerlo (BE)
(72) Inventor: GILLIS, François, 2440 Geel (BE)
(74) Representative: Gevers Patents

(56) References cited:
- CN-A- 105 710 269
- CN-U- 205 414 294
- CN-U- 207 333 397
- CN-U- 208 046 509
- US-A- 5 691 037
- US-B1- 6 621 658

## Description

### Technical domain

The present invention relates to a device for hot forging of a metal article, in particular a flange. The present invention also relates to a method for installing one or two die halves into such a device.

### State of the art

A device for hot forging of a metal article, in particular a flange, i.e. a hot forging device, typically comprises a frame having an anvil and a ram thereon which are located opposite to each other, wherein the ram is arranged to move upward and downward relative to the anvil; a lower die half mounted to the anvil and an upper die half mounted to the ram; and a mounting mechanism for mounting the upper die half to the ram.

Such a hot forging device is used for forging a metal block into the desired shape, for example a flange. It is, however, also possible to manufacture other metal articles, for example a crankshaft. The metal block is positioned onto the lower die half, after which the ram drops down, under the force of gravity and/or powered by hydraulic or pneumatic energy, to forge the block into the desired shape. Typically, the ram needs to move down once or several times to give the block its correct shape.

The dimensions, the weight, the type and the material of the flange to be manufactured vary depending on the application. A number of indicative values are given below for various flange parameters, but the invention is not limited thereto. The types of the flanges to be manufactured may differ, some examples being a welding neck flange (EN-TYPE 11), a blind flange (EN-TYPE 05) or other EN-TYPES, such as 01/12, 13, 14, 21, etc. as determined according to the standard NBN EN 1092-1 : 2018. Dimensions of the flanges to be manufactured vary from a diameter of 8 cm to 100 cm. The pressure rating of the flanges to be manufactured may range from 2 bar to 400 bar. The weight of the flanges to be manufactured is typically 2 to 1300 kg. Some examples of materials are iron, steel and preferably stainless steel. Some specific examples are PN2.5/PN06/PN10 to DN800, PN16/PN25/PN40 to DN600, PN63/PN100 to DN500, PN160/PN250 to DN300 and PN320/PN400 to DN200 according to the standard NBN EN 1092-1 : 2018.

Based on the examples listed above, it should be clear that the ram needs to carry enough energy in order to deform such metal blocks. In practice, a ram has a mass of 1 to 10 metric tons and yields a momentum of 4.000 to 80.000 kg m/s. It should therefore come as no surprise that enormous forces are exerted on the die halves, the anvil and the ram while in use. Moreover, the device is intended for hot forging of a flange, as a result of which temperatures may also reach considerable heights, as the metal block typically has a temperature that is higher than 1.000 °C, for example 1.200 °C. Moreover, often a flammable powder, such as sawdust, is applied onto the hot block to prevent the die halves from adhering to the block.

Based on the examples listed above, it should be clear that the designs of the flanges may differ. Since the design of the flanges is directly dependent on the design of the die halves, in particular the upper die half, at least the upper die half should also be replaceable. Moreover, while the production of flanges used to be carried out in larger campaigns to avoid replacing the die halves, the ability to manufacture with short delivery times and in limited batches has steadily gained importance. This is particularly advantageous in the case of orders for the replacement of defective flanges in existing pipes, there typically only one or a few of the same flanges are needed for the repair. Moreover, such manufacturing makes it possible to avoid keeping large stocks, with associated storage costs and the like.

All of these circumstances mean that the mounting mechanism for mounting the upper die half to the ram should first and foremost be sufficiently strong to ensure that no fractures or deformations will occur during forging, in particular during the impact of the ram of the metal block. Moreover, the mounting mechanism should be easy to use so that the upper die half can be replaced quickly for the production of a limited batch of flanges. This is because, in operation, at least the upper die half needs to be replaced several times per day.

Several mounting mechanisms are already known in the art for mounting a die half to the ram or to the anvil.

US3075416 and US3326032 disclose a mounting mechanism based on a dovetail joint. A joint using this principle is also shown in figure 1 between the anvil and the frame. In US3075416 and US3326032, the anvil is provided with a recess into which the die half is to be placed. Two opposing sidewalls of the recess are arranged at an angle so that the upper opening of the recess has a smaller surface area than its bottom. The bottom of the die half is provided with a similar protrusion with sidewalls arranged at an angle. The protrusion fits into the recess, and for securing them a wedge is placed between a sidewall of the anvil and a sidewall of the die half. A similar mounting mechanism is known for mounting the upper die half to the ram. Similar mounting mechanisms, which also operate based on a dovetail joint, are described in US1800339, DE29609152U1 and DE29916856U1.

The main disadvantage of such mounting mechanisms is the deformation of the wedge due to the ambient heat generated by the hot metal block. Due to this heat, the wedge, like any other part of the forging device, will expand. As a result, after the hot forging operation, the wedge will be jammed between the ram and the upper die half. In practice, it can take several hours before the jammed wedge can be freed again.

Further disadvantages are that the wedge and/or the angled sidewalls undergo wear and tear, possibly leading to gaps between the die half and the ram or the anvil. Given the large forces applied in such a device, such gaps in any form are unwanted, and possibly dangerous in case the die half should come loose during use. Furthermore, the wedge usually needs to be made of the same material as the die halves and the ram and anvil, or at least have a similar strength, to limit wear and tear as well as possible.

To overcome some of the drawbacks of a mounting mechanism based on a dovetail joint, in particular the difficulties when replacing the die half, several bolt-based mounting mechanisms are known.

CN201257490Y discloses a device for hot forging of a metal article, wherein the die halves are mounted by means of bolts to the anvil and the ram. In particular, the die halves are provided with grooves on their outside, which are engaged, on either side of the die half, by a plurality of mounting elements. Each mounting element is provided with a bolt hole that matches a bolt hole in the anvil or the ram. Bolts are provided for securing each mounting element to the anvil or the ram, thus securing the die half.

More in general, the mounting mechanism of CN201257490Y comprises a left bolt hole and a right bolt hole in a bottom of the ram; a protruding edge of the outer wall of the upper die half; a left and a right mounting plate, which are located opposite to each other and substantially parallel to the bottom of the ram, wherein the facing sides of the mounting plates at least partly abut against the protruding edge, wherein each mounting plate is provided with at least one bolt hole, wherein the bolt hole of the left mounting plate is aligned with the left bolt hole and the bolt hole of the right mounting plate is aligned with the right bolt hole; and a left and a right bolt for mounting the mounting plates to the bottom of the ram by means of said bolt holes.

A similar principle is used in the hot forging devices disclosed in CN106180521 B, CN206065312U, CN105710269A and CN205414294U.

Document CN105710269A or document CN205414294U form the basis for the preamble of claim 1.

CN105921664A and CN206083733 describe a device for hot forging of a metal article, wherein the die halves are mounted by means of bolts to the anvil and the ram. In this device, a principle similar to a dovetail joint is also used. The mounting element has a bolt hole for mounting to the anvil or the ram, and also has an inclined end that exerts a pressure against a corresponding inclined part of the outer wall of a die half. CN208303763U and CN204620977 describe a similar device that also uses a bolt connection for a mounting element, with said mounting element having an inclined wall.

These devices offer the advantage that the bolts can easily be removed after use, so that the die halves can be quickly and easily replaced.

The main disadvantage to these devices is that the bolts may become loose during use. In particular, regardless of the tension with which the bolts are secured, for example by using a pneumatic wrench, it was found that the bolts can partially become loose due to vibration, as a result of the large forces and vibrations generated during the impact of the ram. Even is this loosening by vibration initially represents only a minimal rotation of the bolt, for example a quarter turn, this will still cause a gap between the die half and the ram or the anvil. Such gaps are unwanted and typically become wider during further use of the device, leading to serious risks of defects and/or breakage of the device, such as a die half coming loose. The expansion and compression as a result of differences in temperature before, during and after use may also contribute to this.

### Description of the invention

It is an aim of the present invention to provide a device for hot forging of a metal article, in particular a flange, wherein in particular the upper die half can be quickly and easily replaced without thereby increasing the risk of defects and/or breakage.

This aim is achieved by the mounting mechanism being further provided with a left elastically compressible plate, situated on a distance from the upper die half and located between the left mounting plate and the bottom of the ram, wherein said left bolt is located in the open space between the left elastically compressible plate and the upper die half; and a right elastically compressible plate, situated on a distance from the upper die half and located between the right mounting plate and the bottom of the ram, wherein said right bolt is located in the open space between the right elastically compressible plate and the upper die half.

Providing such elastically compressible plates ensures that the bolts, even during the impact of the ram onto the anvil, still remain tensioned, so that the bolts do not vibrate loose, or the risk of such vibrating loose is at least lowered.

In particular, the plates are located on the outside of the bolts and are partially compressed between the mounting plates and the bottom of the ram. By providing the elastically compressible plates on the outside of the bolts, these plates will exert a force onto the bolts. Specifically, the elastically compressible plates exert a downward force onto the mounting plates. Part of the downward force from the elastically compressible plates acts on the bolts, so that they are always under pressure. This is advantageous as a bolt under tension is less likely to vibrate loose.

Moreover, the leverage effect relative to the bolt ensures that the inner side of the mounting plates, being those that abut against the protruding edge of the die half, will exert an upward force onto the die half so that the latter is pressed firmly against the ram.

Furthermore, elastically compressible plates are advantageous when compared to local elastically compressible elements arranged around the bolt, for example a retaining washer or spring washer or other means locally positioned underneath the bolt head such as disclosed in CN 208 046 509 U, CN 207 333 397 U, US 6 621 658 B1, or US 5 691 037 A. Due to the large forces with which the bolts are secured and the high temperatures reached while using the device, such small elements are entirely or almost entirely compressed without retaining sufficient elasticity. When using plates, which have a relatively large surface area when compared to the bolts, the large forces are absorbed at a relatively low pressure so that the plates, although they are compressed, still retain a sufficient degree of elasticity.

As the mounting mechanism uses bolts, which can easily be removed, the hot forging device according to the present invention also allows quick and easy replacement of the die half.

In an embodiment of the present invention, each mounting plate is provided with two bolt holes, wherein the left bolt hole is part of a pair of left bolt holes and the right bolt hole is part of a pair of right bolt holes, wherein the two bolt holes on the left mounting plate correspond to said pair of left bolt holes in the bottom of the ram and wherein the two bolt holes on the right mounting plate correspond to said pair of right bolt holes in the bottom of the ram.

The use of two or more bolts per mounting plate is advantageous as it constitutes a stronger connection when compared to a single bolt. Moreover, the use of two (and no more) bolts is also advantageous as it limits the number of bolt holes in the bottom of the ram, so that the integrity of the latter is only minimally affected. Furthermore, tightening and loosening two bolts only takes up very little time, in particular when using a pneumatic wrench.

In an advantageous embodiment of the present invention, the bottom of the ram is provided with two pairs of left bolt holes and two pairs of right bolt holes, wherein, preferably, the outermost pairs of the bolt holes have a larger diameter.

Providing 8 holes in total in the ram, i.e., two pairs both left and right, allows more variation in diameter of the die half. This is relevant because it is also possible to mount die halves to the ram that have a diameter that is greater than the distance between the innermost pairs of bolt holes. It is further advantageous to provide the outermost pairs of bolt holes with a larger diameter than the innermost pairs, as larger die halves typically have a higher weight, so that larger forces are exerted onto the outermost bolt holes.

In an embodiment of the present invention, the surface area of the left elastically compressible plate is at least 5, preferably at least 10, times larger than the surface area of said left bolt hole, and the surface area of the right elastically compressible plate is at least 5, preferably at least 10, times larger than the surface area of said right bolt hole.

Such a large surface area offers the advantage that the large forces with which the bolts are secured are absorbed at a relatively low pressure, so that the compressible plates, although they are compressed, still retain a degree or elasticity and thus continue to exert sufficient pressure onto the bolts to prevent them from vibrating loose.

In an embodiment of the present invention, the shortest distance between the left bolt hole and the outer end of the left mounting plate is greater than the shortest distance between the left bolt hole and the upper die half, and the shortest distance between the right bolt hole and the outer end of the right mounting plate is greater than the shortest distance between the right bolt hole and the upper die half.

In this embodiment, the leverage effect is optimally utilized. This is relevant because the lever length of the bolts toward the elastically compressible plates is longer than the lever length of that same bolt toward the die half. A longer lever length is advantageous because the force required for retaining the die half converts to a smaller force exerted onto the elastically compressible plates.

In an embodiment of the present invention, said elastically compressible plates are made of wood, preferably plywood, or from polyamide, preferably PA 66, in particular Ertalon^{®}. In practice, it was found that both plywood and Ertalon^{®} are suitable for such a hot forging device. Among these materials, plywood is preferred for its modulus of elasticity and its relatively low price. Moreover, as the plywood is compressed between the bottom of the ram and the mounting plates, there is not enough oxygen present in the vicinity of the plywood to lead to combustion, in particular by the fire generated by adding a flammable material onto the hot block.

In an embodiment of the present invention, said elastically compressible plates are made of a material having a modulus of elasticity of between 1 and 50 GPa, preferably below 20 GPa, more preferably below 10 GPa, preferably above 3 GPa, more preferably above 5 GPa.

Such a material is typically sufficiently elastic to still exert sufficient pressure, even in a compressed state, onto the mounting plates and the bolts.

In an embodiment of the present invention, the bottom of the ram is provided with a recess and the top of the upper die half is provided with a corresponding recess, wherein the mounting mechanism is further provided with an alignment block arranged in the cavity formed by said recesses, wherein preferably said recesses are centrally located in both the bottom of the ram and the top of the upper die half.

Such an alignment block helps with correct positioning of the die half in relation to the ram, in particular before is has been secured to the latter by means of the bolts.

In an embodiment of the present invention, said protruding edge is formed by a groove in the outer wall of the upper die half.

Such a groove is easy to apply and allows the mounting plates to slide at least partly into the groove for the inner sides of the mounting plates to abut against the protruding edge.

In an embodiment of the present invention, the device comprises a further mounting mechanism for mounting the lower die half to the anvil, said further mounting mechanism having the same properties as said mounting mechanism described above.

This allows the lower die half to be quickly and easily replaced as well, lowering the risk of the bolts vibrating loose during operation. In particular, all of the advantages described above with respect to the upper die half also apply to the lower die half.

In an embodiment of the present invention, the device is provided with a cylinder-piston mechanism coupled to the ram and arranged for moving the ram at least upward. Preferably, the cylinder-piston mechanism is driven by a drive, such as a pump. Such a cylinder-piston mechanism provides a simple design for moving the ram upward.

The present disclosure further relates to the use of the device described above for manufacturing a metal article, in particular a flange, said use not forming part of the claimed invention.

The present invention further relates to a method for installing an upper die half in the device described above, wherein the method comprises: positioning the upper die half against the bottom of the ram; positioning the mounting plates against the protruding edge of the upper die half; placing the elastically compressible plates between the mounting plates and the bottom of the ram; securing the mounting plates to the bottom of the ram by means of the bolts; and tightening the bolts.

This method offers the advantage of a quick and simple mounting of the upper die half to the ram, lowering the risk of the bolts vibrating loose while using the device, since the mounting mechanism as described above is used. The same advantages of this mounting mechanism therefore also apply to the method.

In an embodiment of the present invention, the elastically compressible plates are compressed between 1% and 50% while tightening the bolts, preferably between 5% and 30% and more preferably between 10% and 20%.

It was found that with such a compression, the elastically compressible plates exert sufficient force onto the bolts and the mounting plates without thereby being excessively compressed, in which case their elasticity could be lost due to breakage of the material.

### Brief description of the drawings

The invention will be further elucidated by means of the following description and the appended figures.
Figure 1 shows a device for hot forging of a metal article, in particular a flange according to the present invention.
Figure 2 shows a top view of the mounting mechanism and the upper die half.
Figure 3 shows a same view as figure 2 but with an alternative mounting mechanism and an alternative die half.
Figure 4 shows the bottom of the ram, which is suitable for both the mounting mechanism of figure 2 and that of figure 3.
Figure 5 shows a cross-section through the upper die half, the bottom of the ram and the mounting mechanism in-between, along line V-V in figure 4.

### Modes for carrying out the invention

The present invention will hereafter be described with respect to particular embodiments and with reference to certain drawings, but the invention is not limited thereto and is defined only by the claims. The drawings shown here are merely schematic depictions and are nonlimiting. In the drawings, the dimensions of certain parts may be exaggerated, meaning that the parts in question are not drawn to scale, for illustrative purposes only. The dimensions and the relative dimensions do not necessarily correspond to the actual reductions to practice of the invention.

Furthermore, terms such as "first", "second", "third" and the like are used in the description and in the claims for distinguishing between similar elements, and not necessarily for describing a sequential or chronological order. The terms in question are interchangeable under the appropriate circumstances and the embodiments of the invention can operate in other sequences than described or illustrated here.

Moreover, terms such as "top", "bottom", "over", "under" and the like are used in the description and the claims for descriptive purposes and not necessarily for indicating relative positions. The terms so used are interchangeable under the appropriate circumstances, and the embodiments of the invention can operate in other orientations than those described or illustrated herein.

The term "comprising" and derivative terms, as used in the claims, should not be interpreted as being restricted to the means listed respectively thereafter; the term does not exclude other elements or steps. It should be interpreted as specifying the stated features, integers, steps or components as referred to, without, however, precluding the presence or addition of one or more additional features, integers, steps or components, or groups thereof. Thus, the scope of an expression such as "a device comprising means A and B" is not limited to devices consisting only of components A and B.

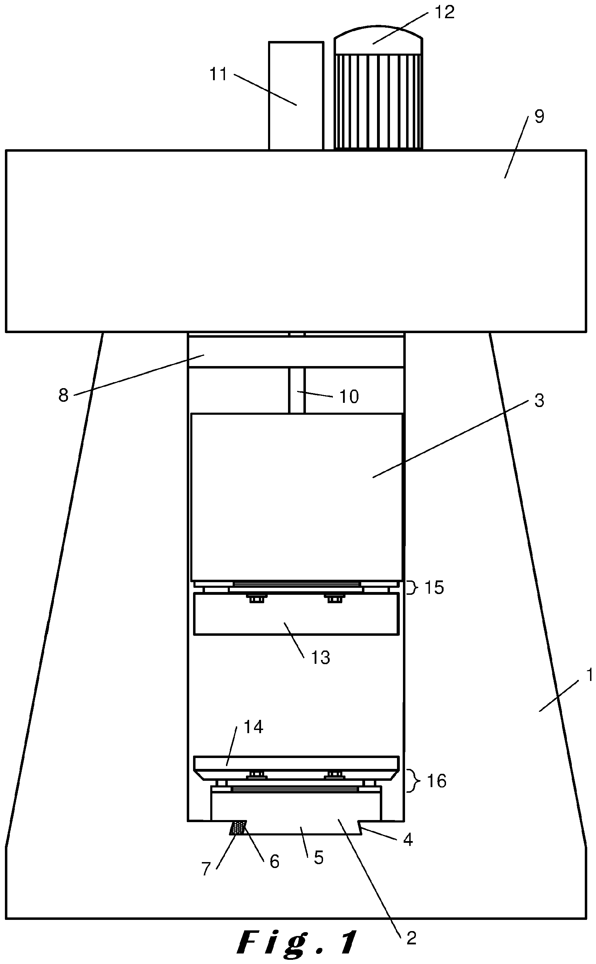

A device for hot forging of a flange is shown in figure 1. The device comprises a frame 1 having an anvil 2 and a ram 3 thereon, which are located opposite to each other. In the embodiment shown, the anvil 2 is mounted to the frame 1 by means of a dovetail joint. Specifically, a recess is provided in the frame 1, having sidewalls arranged at an angle 4 so that the upper opening of the recess has a smaller surface area than its bottom. The anvil 2 is provided at its bottom with a corresponding protrusion 5 having sidewalls arranged at an angle 6. The maximum width between the inclined sidewalls 6 is smaller than the minimum opening of the recess in the anvil 2, so that the anvil 2 can be easily placed onto the frame 1 via the upper side of the recess. For securing the anvil 2 to the frame 1, a wedge 7 is placed between a sidewall 6 of the anvil 2 and a sidewall 4 of the frame 1. As shown in figure 1, this wedge 7 has a cross-sectional shape of a parallelogram, so that it matches the design of the dovetail joint. Preferably, the wedge 7 has a cross-section of which the surface area increases in the longitudinal direction of the wedge 7, in other words, the surface area of the parallelogram is smaller at one end of the wedge 7 than at the other. This allows the wedge 7 to be tensioned between the anvil 2 and the frame 1 and may also serve to accommodate for manufacturing tolerances of the dimensions of the anvil 2 and/or the frame 1.

It should be understood that other mounting mechanisms are possible for mounting the anvil 2 to the frame 1. Moreover, it is also possible to manufacture the anvil 2 as an integral piece with the frame 1.

The frame 1 has upright sidewalls that are connected at the top by one or more transverse supports 8. On top of the frame 1, a support platform 9 is provided, to which the ram 3 is mounted. In particular, the ram 3 is located below the support platform 9 and is mounted thereto by means of a piston 10. Specifically, the piston 10 is mounted at its lower end to the top of the ram 3, and is mounted at its other end in a corresponding cylinder 11 resting on the support platform 9. A drive 12, in particular a pump, is provided for driving the cylinder-piston mechanism formed by the piston 10 and the cylinder 11. Specifically, the drive 12 provides the upward movement of the ram 3 relative to the anvil 2. Under the force of gravity, the ram 3 then drops down toward the anvil for hot forging a metal block (not shown) located between the anvil 2 and the ram 3. The cylinder-piston mechanism 10, 11 may also be used in combination with a drive for downward movement of the ram 3, in addition to the free falling due to gravity. This can result in a larger speed at impact, and thus a larger deformation of the metal block.

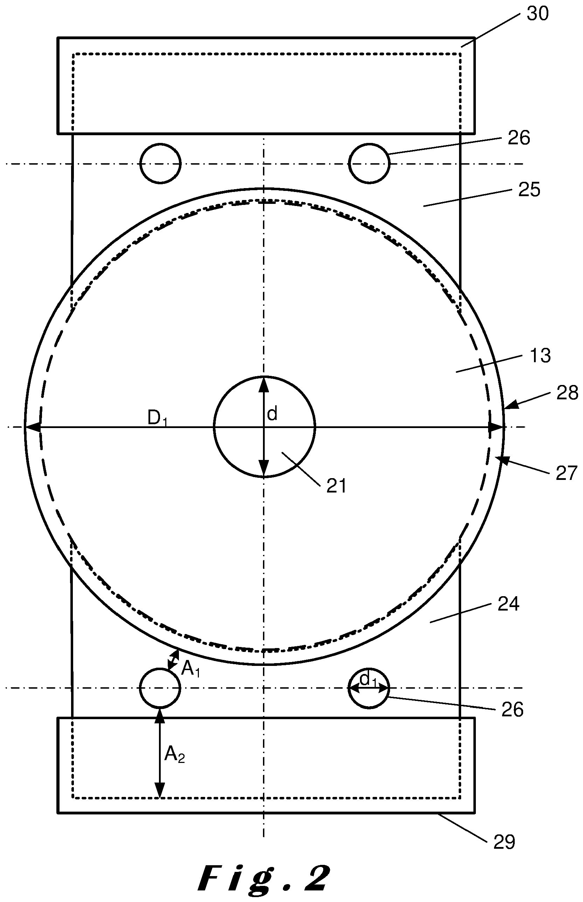

The hot forging device further comprises an upper die half 13 and a lower die half 14. The upper die half 13 is mounted to the bottom of the ram 3 by means of an upper mounting mechanism 15, which is described in more detail in reference to figures 2 to 5, and the lower die half 14 is mounted to the top of the anvil 2 by means of a lower mounting mechanism 16. In the embodiment shown, both mounting mechanisms 15, 16 are virtually identical, but it is also possible to use a different lower mounting mechanism, as that half 14 in practice does not need to be replaced as often as the upper die half 13. This is because the lower die half 14 is typically flat and therefore has little to no bearing on the dimensions of the flange.

Such a hot forging device is used for forging a metal block into the desired shape, for example a flange. It is, however, also possible to manufacture other metal articles, for example a crankshaft. The metal block is positioned onto the lower die half 14, after which the ram 3 drops down, under the force of gravity, to forge the block into the desired shape. Typically, the ram 3 needs to drop down several times to give the block its correct shape. The dimensions, the weight, the type and the material of the flange to be manufactured vary depending on the application, as described above.

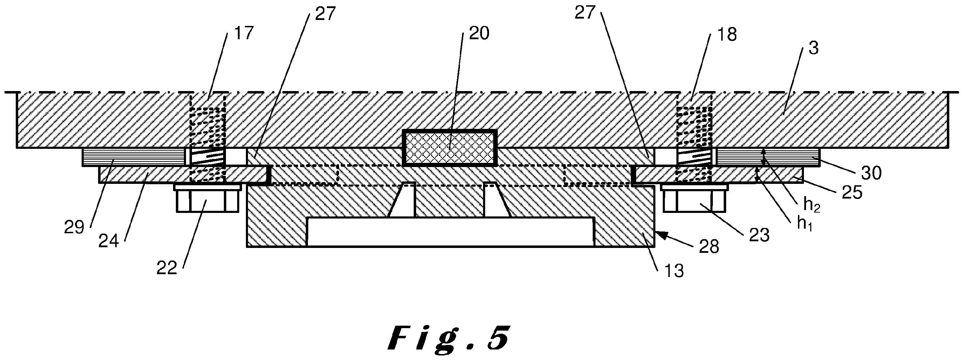

The mounting mechanism 15, incl. the upper die half 13 and part of the ram 3, is shown in vertical cross-section in figure 5. It should be understood that, although the mounting mechanism will be described in reference to the ram and the upper die half, this also applies to the lower die half mounted to the anvil.

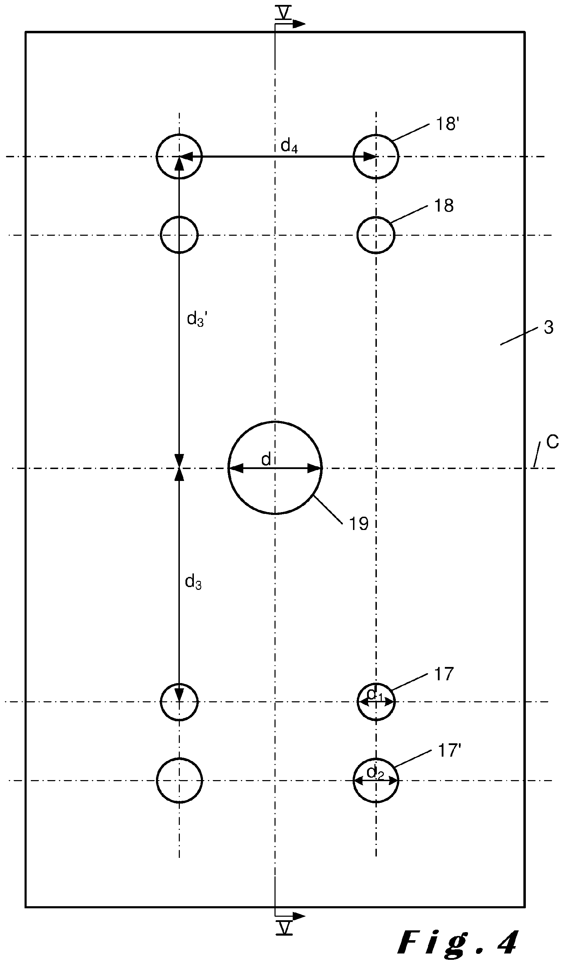

As shown in figure 5, the bottom of the ram 3 is provided with a left bolt hole 17 and a right bolt hole 18. In the embodiments shown, this is a pair of left bolt holes 17 and a pair of right bolt holes 18 (as shown in figure 4), as this provides a more sturdy mounting of the upper die half 13 to the ram 3.

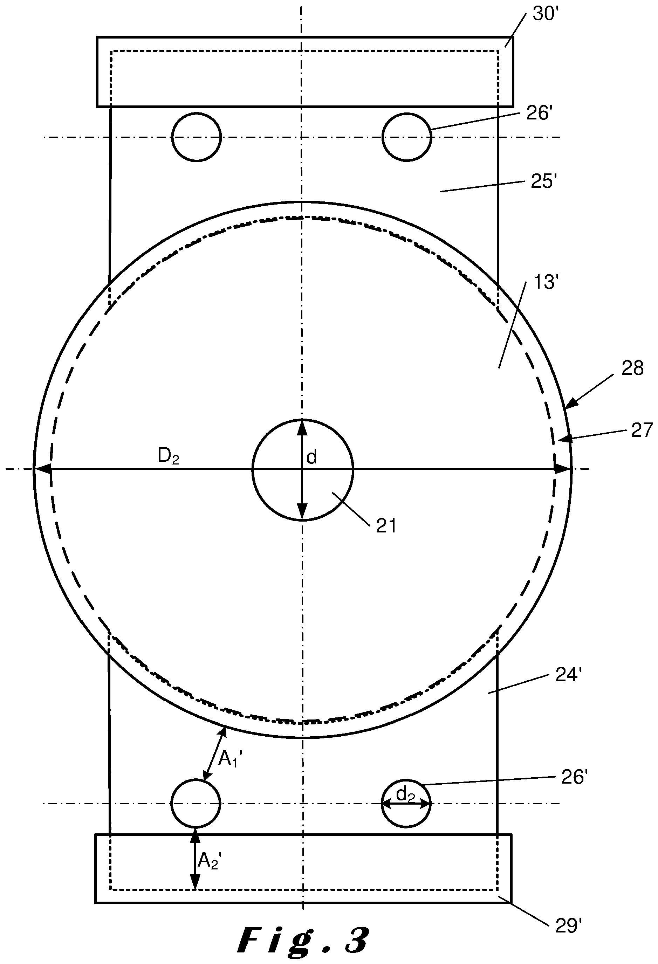

As shown in figure 4, where the bottom of the ram 3 is illustrated, the bottom is provided with two pairs of left bolt holes 17, 17' and two pairs of right bolt holes 18, 18'. In the following, a same reference number is used with an added apostrophe to refer to a same functional element but with a different placement and/or dimension. In particular, a functional element is indicated with an apostrophe if the functional element in question is suitable for the outermost bolt holes 17', 18' (figure 3), while the same functional element without an apostrophe is suitable for the innermost bolt holes 17, 18 (figure 2).

The bolt holes 17', 18' are located at a greater distance from the center of the bottom of the ram 3 and also have a larger diameter than the bolt holes 17, 18. The reason for this is that the bolt holes 17', 18' are used for mounting an upper die half 13 having a larger diameter D₂ (see figure 3) when compared to a die half 13 mounted to the bolt holes 17, 18 having a diameter D₁ (see figure 2). In particular, the diameter D₂ is so large that the die half 13' at least partly covers the bolt holes 17, 18.

As a die half 13' having a larger diameter typically has a higher weight, the bolt holes 17', 18' are also made larger than the bolt holes 17, 18. In particular, bolt holes 17, 18 have a diameter d₁ and bolt holes 17', 18' have a diameter d₂. The diameter d₁ is at least 30 mm, preferably at least 40 mm and more preferably at least 45 mm, and is substantially equal to 50 mm in the embodiment shown. The diameter d₂ is at least 40 mm, preferably at least 50 mm and more preferably at least 55 mm, and is substantially equal to 60 mm in the embodiment shown. The distance d₃, d₃' between the bolt holes 17, 18, 17', 18' and the center line C of the bottom of the ram 3 is indicated in figure 4. The distance d₃ is preferably between 200 and 400 mm and more preferably between 275 and 350 mm, and in the embodiment shown is substantially equal to 325 mm. The distance d₃' is preferably between 300 and 500 mm and more preferably between 375 and 460 mm, and in the embodiment shown is substantially equal to 435 mm. The distance between the centers of the pairs of bolt holes d₄ is preferably between 150 and 450 mm and more preferably between 220 and 320 mm, and in the embodiment shown is substantially equal to 270 mm. The outer dimensions of the bottom of the ram 3 in the embodiment shown are substantially equal to 1217 mm by 538 mm, but they can at least vary from a length between 800 and 1400 mm and a width between 400 and 1.000 mm.

The bottom of the ram 2 is also provided with a recess 19, said recess 19 in particular being located centrally in the bottom of the ram 2 as shown in figure 4. This recess 19 is intended for the placement of an alignment block 20 that fits into a corresponding recess 21 (see figures 2 and 3) in the top of the upper die half 13. This block 20 helps with positioning the die half 13 relative to the ram 3, in particular during mounting thereof. The recesses 19, 21 have a diameter d that is preferably 50 and 250 mm, more preferably between 80 and 200 mm, most preferably between 100 and 150 mm, and that, in the embodiment shown, is substantially equal to 128 mm.

The bolt holes 17, 18, 17', 18' are for receiving bolts 22, 23. Specifically, a left bolt 22 and a right bolt 23 are provided. In the embodiments shown, these are a pair of left bolts 22 and a pair of right bolts 23, since, as shown in figure 4, there are also left and right pairs of bolt holes 17, 18. The bolts 22, 23 are for mounting a left mounting plate 24, 24' and a right mounting plate 25, 25' to the bottom of the ram 3. For this mounting, the mounting plates 24, 25 are also provided with at least one, in the embodiment shown two, bolt holes 26, 26' that are aligned with the bolt holes 17, 18, 17', 18' in the bottom of the ram 3. The bolt holes 26 have approximately a same diameter d₁ as the bolt holes 17, 18 in the bottom of the ram 3, and the bolt holes 26' have approximately a same diameter d₂ as the bolt holes 17', 18' in the bottom of the ram 3.

As shown in figure 5, the mounting plates 24, 25 are located opposite each other and are substantially, in particular entirely, parallel to the bottom of the ram 3. The facing sides of the mounting plates 24, 25 are located at least partly, in the embodiment shown even entirely, in a groove in the outer wall 28 of the upper die half 13, which groove forms a protruding edge 27. This can also be seen in figures 2 and 3, which show that the die half 13 has an outer wall that is substantially, in particular entirely, cylindrical and is entirely surrounded by the groove. The sides facing each other, which will also be referred to as the inner sides, of the mounting plates 24, 25 have a circular shape corresponding to the cylindrical bottom of the circumferential groove in the upper die half 13. The groove forms a protruding edge 27 against which the inner sides of the mounting plates 24, 25 at least partly abut. The protruding edge 27 of the die half 13 is more particularly clamped between the mounting plates 24, 25 and the bottom of the ram 3. Because the inner sides of the mounting plates 24, 25 hook into the groove in the die half 13, and are themselves secured by means of bolts 26 in the ram 3, the die half 13 is also mounted securely to the bottom of the ram 3. As the mounting mechanism 15 uses bolts 22, 23, which can easily be removed, the hot forging device offers the advantage that the die half 13 can be quickly and easily replaced.

The mounting mechanism 15 is further provided with a left elastically compressible plate 29 and a right elastically compressible plate 30. These compressible plates 29, 30 are located between the bottom of the ram 3 and the mounting plates 24, 25, on a distance from the outer wall 28 of the upper die half 13 leaving an open space between the elastically compressible plates 29, 30 and the outer wall 28 of the upper die half 13. In this way, the bolts 22, 23 are located in the open space between their respective compressible plate 29, 30 and the outer wall 28 of the die half 13, as shown in figure 5. Providing such elastically compressible plates 29, 30 ensures that the bolts 22, 23, even during the impact of the ram 3 onto the anvil 2, still remain tensioned, so that the bolts 22, 23 cannot vibrate loose or are at least less susceptible to vibrating loose.

In particular, the plates 29, 30 are located on the outside of the bolts 22, 23 and are partially compressed between the mounting plates 24, 25 and the bottom of the ram 3. As a result of this placement of the elastically compressible plates 29, 30, they will exert a force onto the bolts 22, 23. Specifically, the elastically compressible plates 29, 30 exert a downward force onto the mounting plates 24, 25. Part of the downward force from the elastically compressible plates 29, 30 acts on the bolts 22, 23, so that they are always under pressure. This is advantageous as a bolt under tension is less likely to vibrate loose. Moreover, the leverage effect relative to the bolts 22, 23 ensures that the inner side of the mounting plates 24, 25, being the side engaging the protruding edge 27 of the die half 13, will exert an upward force onto the die half 13 so that it is clamped against the bottom of the ram 3. By the resilient nature of the compressible plates 29, 30, the mounting plates 24, 25 will also be constantly under pressure and will thus urge the die half 13 constantly against the bottom surface of the ram 3 so that there will never be some play between the die half 13 and the ram 3.

As shown in figures 2 and 3, the elastically compressible plates 29, 30 have a fairly large surface area when compared to the bolt hole(s) 26, 26'. In particular, the surface area of one of the elastically compressible plates 29, 30 is at least 5, preferably at least 10, times larger than the total surface area of the bolt hole(s) 26. Such a large surface area offers the advantage that the large forces with which the bolts 22, 23 are secured, are absorbed at a relatively low pressure, so that the plates 29, 30, although they are compressed, still retain a degree or elasticity and thus continue to exert pressure onto the bolts 22, 23 and onto the mounting plates 24, 25.

In order to make optimal use of the leverage effect of the elastically compressible plates 29, 30, it is advantageous if the shortest distance A₂, A₂' between the bolt hole 26, 26' and the outer end of the mounting plates 24, 25, 24', 25' is greater than the shortest distance A₁, A₁' between the bolt hole 26, 26' and the upper die half 13 (see figures 2 and 3 for indications of A₁, A₁', A₂, A₂'). In this way, the lever length of the bolt 22, 23 toward the elastically compressible plates 29, 30 is longer than the lever length of that same bolt 22, 23 toward the die half 13. A longer lever length is advantageous because the force required for retaining the die half 13 converts to a smaller force exerted onto the elastically compressible plates 29, 30. The distance A₂ is typically between 80 and 200 mm and preferably between 120 and 160 mm, and in the embodiment shown is substantially equal to 140 mm. The distance A₂' is typically between 50 and 200 mm and preferably between 90 and 130 mm, and in the embodiment shown is substantially equal to 110 mm.

Different materials may be used for forming the elastically compressible plates 29, 30. On the one hand, it should be clear that the material needs to be sufficiently heat-resistant, in view of the vicinity of a metal block of which the temperature can be more than 1.000 °C, for example 1.200 °C. For this reason, it should be taken into account that the material should not melt at such temperatures. Furthermore, it is advantageous if the material has a modulus of elasticity of between 1 and 50 GPa, preferably below 20 GPa, more preferably below 10 GPa, preferably above 3 GPa, more preferably above 5 GPa. Such a material is typically sufficiently elastic to still exert sufficient pressure, even in a compressed state, onto the mounting plates 24, 25 and the bolts 22, 23. The modulus of elasticity is in particular determined using the ASTM D 3043 standard of 2011.

Preferably, the elastically compressible plates 29, 30 are made of wood, more preferably plywood. An alternative material is polyamide, preferably PA 66, in particular Ertalon^{®}. Among these materials, plywood is preferred for its modulus of elasticity and its relatively low price, which is advantageous as the plates 29, 30 frequently need to be replaced. Moreover, as the plywood is compressed between the bottom of the ram 3 and the mounting plates 24, 25, there is not enough oxygen present in the vicinity of the plywood to lead to combustion.

A method for installing the upper die half 13 onto the bottom of the ram 3 by means of the mounting mechanism 15 comprises several steps. Initially, the upper die half 13 is positioned against the bottom of the ram 3. For this, it is advantageous to use the alignment block 20. Next, the mounting plates 24, 25 can be slid into the circumferential groove in the outer wall 28 of the die half 13 until their bolt holes 26 correspond to the bolt holes 17, 18, 17', 18' in the ram 3, and so that their inner sides abut against the protruding edge 27 formed by the groove in the die half 13. Simultaneously (or already in advance, or later), the elastically compressible plates 29, 30 are positioned between the mounting plates 24, 25 and the ram 3. The entire assembly is then secured by inserting and tightening the bolts 22, 23. During this tightening, the elastically compressible plates 29, 30 are compressed, preferably between 1% and 50%, more preferably between 5% and 30% and most preferably between 10% and 20% of their original thickness.

In figure 5, this original thickness is indicated by h₂. In an embodiment, h₂ is between 5 and 35 mm and preferably between 10 and 20 mm, and in the embodiment shown it is substantially equal to 18 mm. The thickness of the mounting plates 24, 25 is also indicated in figure 5 as height h₁. In an embodiment, h₁ is between 5 and 35 mm and preferably between 10 and 20 mm, and in the embodiment shown it is substantially equal to 20 mm.

Although certain aspects of the present invention have been described in reference to specific embodiments, it should be understood that these aspects may be implemented in other forms within the scope of protection as determined by the claims.

## Claims

1. A device for hot forging of a metal article, in particular a flange, said device being provided with:
- an anvil (2) and a ram (3) which are located opposite to each other, wherein the ram (3) is arranged to move upward and downward relative to the anvil (2);
- a lower die half (14) mounted to the anvil (2) and an upper die half (13) mounted to the ram (3); and
- a mounting mechanism (15) for mounting the upper die half (13) to the ram (3), said mounting mechanism (15) being provided with:
- a left bolt hole and a right bolt hole (17, 18) in a bottom of the ram (3);
- a protruding edge (27) of the outer wall (28) of the upper die half (13);
- a left and a right mounting plate (24, 25) which are located opposite to each other and substantially parallel to the bottom of the ram (3), wherein the facing sides of the mounting plates (24, 25) at least partly abut against the protruding edge (27), wherein each mounting plate (24, 25) is provided with at least one bolt hole (26), wherein the bolt hole (26) of the left mounting plate (24) is aligned with the left bolt hole (17) and the bolt hole (26) of the right mounting plate (25) is aligned with the right bolt hole (18); and
- a left and a right bolt (22, 23) for mounting the mounting plates (24, 25) to the bottom of the ram (3) by means of said bolt holes (17, 18, 26),
**characterized in that** the mounting mechanism (15) is further provided with:
- a left elastically compressible plate (29) situated on a distance from the upper die half (13) and located between the left mounting plate (24) and the bottom of the ram (3), wherein said left bolt (22) is located in the open space between the left elastically compressible plate (29) and the upper die half (13); and
- a right elastically compressible plate (30) situated on a distance from the upper die half (13) and located between the right mounting plate (25) and the bottom of the ram (3), wherein said right bolt (23) is located in the open space between the right elastically compressible plate (30) and the upper die half (13).

2. The device according to claim 1, **characterized in that** each mounting plate (24, 25) is provided with two bolt holes (26), wherein the left bolt hole (17) is part of a pair of left bolt holes and the right bolt hole (18) is part of a pair of right bolt holes, wherein the two bolt holes (26) on the left mounting plate (24) correspond to said pair of left bolt holes (17) in the bottom of the ram (3) and wherein the two bolt holes (26) on the right mounting plate (25) correspond to said pair of right bolt holes (18) in the bottom of the ram (3).

3. The device according to claim 2, **characterized in that** the bottom of the ram (3) is provided with two pairs of left bolt holes (17, 17') and two pairs of right bolt holes (18, 18'), wherein, preferably, the outermost pairs of the bolt holes (17', 18') have a larger diameter.

4. The device according to any of the previous claims, **characterized in that** the surface area of the left elastically compressible plate (29) is at least 5, preferably at least 10, times larger than the surface area of said left bolt hole (17, 17') and **in that** the surface area of the right elastically compressible plate (30) is at least 5, preferably at least 10, times larger than the surface area of said right bolt hole (18, 18').

5. The device according to any of the previous claims, **characterized in that** the shortest distance (A₂) between the left bolt hole (17) and the outer end of the left mounting plate (24) is greater than the shortest distance (A₁) between the left bolt hole (17) and the upper die half (13) and **in that** the shortest distance (A₂) between the right bolt hole (18) and the outer end of the right mounting plate (25) is greater than the shortest distance (A₁) between the right bolt hole (18) and the upper die half (13).

6. The device according to any of the previous claims, **characterized in that** said elastically compressible plates (29, 30) are made of wood, preferably plywood, or from polyamide, preferably PA 66, in particular Ertalon^{®}.

7. The device according to any of the previous claims, **characterized in that** said elastically compressible plates (29, 30) are made of a material having a modulus of elasticity of between 1 and 50 GPa, preferably below 20 GPa, more preferably below 10 GPa, preferably above 3 GPa, more preferably above 5 GPa.

8. The device according to any of the previous claims, **characterized in that** the bolts (22, 23) have an outer diameter of at least 30 mm, preferably at least 40 mm and more preferably at least 45 mm.

9. The device according to any of the previous claims, **characterized in that** the bottom of the ram (3) is provided with a recess (19) and the top of the upper die half (13) is provided with a corresponding recess (21), wherein the mounting mechanism (15) is further provided with an alignment block (20) arranged in the cavity formed by said recesses (19, 21), wherein, preferably, said recesses (19, 21) are centrally located in both the bottom of the ram (3) and the top of the upper die half (13).

10. The device according to any of the previous claims, **characterized in that** said protruding edge (27) is formed by a groove in the outer wall(28) of the upper die half (13).

11. The device according to any of the previous claims, **characterized in that** the device comprises a further mounting mechanism (16) for mounting the lower die half (14) to the anvil (2), said further mounting mechanism (16) having the features of said mounting mechanism (15) as defined in any of the previous claims.

12. The device according to any of the previous claims, **characterized in that** the device is provided with a cylinder-piston mechanism (10, 11) coupled to the ram (3) and arranged for moving the ram (3) at least upward.

13. The device according to claim 12, **characterized in that** the device is further provided with a pump (12) for driving the cylinder-piston mechanism (10, 11).

14. Method for installing an upper die half (13) in the device according to any of the claims 1 to 13, wherein the method comprises:
- positioning the upper die half (13) against the bottom of the ram (3);
- positioning the mounting plates (24, 25) against the protruding edge (27) of the upper die half (13);
- placing the elastically compressible plates (29, 30) between the mounting plates (24, 25) and the bottom of the ram (3);
- securing the mounting plates (24, 25) to the bottom of the ram (3) by means of the bolts (22, 23); and
- tightening the bolts (22, 23).

15. Method according to claim 14, wherein, while tightening the bolts (22, 23), the elastically compressible plates (29, 30) are compressed between 1% and 50%, preferably between 5% and 30% and more preferably between 10% and 20%.

## Patentansprüche

1. Eine Vorrichtung zum Warmschmieden eines Metallgegenstands, insbesondere eines Flansches, wobei diese Vorrichtung ausgestattet ist mit:
- einem Amboss (2) und einem Stößel (3), die sich einander gegenüber befinden, wobei der Stößel (3) angeordnet ist, um sich in Bezug auf den Amboss (2) nach oben und unten zu bewegen;
- einer unteren Formhälfte (14), montiert am Amboss (2), und einer oberen Formhälfte (13), montiert am Stößel (3); und
- einem Montagemechanismus (15) zum Montieren der oberen Formhälfte (13) an den Stößel (3), wobei dieser Montagemechanismus (15) ausgestattet ist mit:
- einem linken Bolzenloch und einem rechten Bolzenloch (17, 18) in einer Unterseite des Stößels (3);
- einer überragenden Kante (27) der Außenwand (28) der oberen Formhälfte (13);
- einer linken und einer rechten Montageplatte (24, 25), die einander gegenüber und im Wesentlichen parallel zur Unterseite des Stößels (3) liegen, wobei die Sichtseiten der Montageplatten (24, 25) zumindest teilweise an die überragende Kante (27) anliegen, wobei jede Montageplatte (24, 25) mit mindestens einem Bolzenloch (26) versehen ist, wobei das Bolzenloch (26) der linken Montageplatte (24) mit dem linken Bolzenloch (17) ausgerichtet ist und das Bolzenloch (26) der rechten Montageplatte (25) mit dem rechten Bolzenloch (18) ausgerichtet ist; und
- einem linken und einem rechten Bolzen (22, 23) zum Montieren der Montageplatten (24, 25) an die Unterseite des Stößels (3) mittels der erwähnten Bolzenlöcher (17, 18, 26),
**dadurch gekennzeichnet, dass** der Montagemechanismus (15) ferner ausgestattet ist mit:
- einer linken elastisch komprimierbaren Platte (29) gelegen in einem Abstand von der oberen Formhälfte (13) und befindlich zwischen der linken Montageplatte (24) und der Unterseite des Stößels (3), wobei sich der erwähnte linke Bolzen (22) im offenen Raum zwischen der linken elastisch komprimierbaren Platte (29) und der oberen Formhälfte (13) befindet; und
- einer rechten elastisch komprimierbaren Platte (30) gelegen in einem Abstand von der oberen Formhälfte (13) und befindlich zwischen der rechten Montageplatte (25) und der Unterseite des Stößels (3), wobei sich der erwähnte rechte Bolzen (23) im offenen Raum zwischen der rechten elastisch komprimierbaren Platte (30) und der oberen Formhälfte (13) befindet.

2. Die Vorrichtung nach Anspruch 1, **dadurch gekennzeichnet, dass** jede Montageplatte (24, 25) mit zwei Bolzenlöchern (26) versehen ist, wobei das linke Bolzenloch (17) Teil eines Paares von linken Bolzenlöchern ist und das rechte Bolzenloch (18) Teil eines Paares von rechten Bolzenlöchern ist, wobei die zwei Bolzenlöcher (26) auf der linken Montageplatte (24) mit dem erwähnten Paar von linken Bolzenlöchern (17) in der Unterseite des Stößels (3) übereinstimmen und wobei die zwei Bolzenlöcher (26) auf der rechten Montageplatte (25) mit dem erwähnten Paar von rechten Bolzenlöchern (18) in der Unterseite des Stößels (3) übereinstimmen.

3. Die Vorrichtung nach Anspruch 2, **dadurch gekennzeichnet, dass** die Unterseite des Stößels (3) mit zwei Paaren von linken Bolzenlöchern (17, 17') und zwei Paaren von rechten Bolzenlöchern (18, 18') versehen ist, wobei die äußersten Paare von Bolzenlöchern (17', 18') bevorzugt einen größeren Durchmesser haben.

4. Die Vorrichtung nach irgendeinem der vorigen Ansprüche, **dadurch gekennzeichnet, dass** die Oberfläche der linken elastisch komprimierbaren Platte (29) mindestens 5-, bevorzugt mindestens 10-mal größer ist als die Oberfläche des erwähnten linken Bolzenlochs (17, 17'), und dadurch, dass die Oberfläche der rechten elastisch komprimierbaren Platte (30) mindestens 5-, bevorzugt mindestens 10-mal größer ist als die Oberfläche des erwähnten rechten Bolzenlochs (18, 18').

5. Die Vorrichtung nach irgendeinem der vorigen Ansprüche, **dadurch gekennzeichnet, dass** der kürzeste Abstand (A2) zwischen dem linken Bolzenloch (17) und dem äußeren Ende der linken Montageplatte (24) größer ist als der kürzeste Abstand (A1) zwischen dem linken Bolzenloch (17) und der oberen Formhälfte (13), und dadurch, dass der kürzeste Abstand (A2) zwischen dem rechten Bolzenloch (18) und dem äußeren Ende der rechten Montageplatte (25) größer ist als der kürzeste Abstand (A1) zwischen dem rechten Bolzenloch (18) und der oberen Formhälfte (13).

6. Die Vorrichtung nach irgendeinem der vorigen Ansprüche, **dadurch gekennzeichnet, dass** die erwähnten elastisch komprimierbaren Platten (29, 30) aus Holz, bevorzugt Sperrholz, oder aus Polyamid, bevorzugt PA 66, insbesondere Ertalon^{®}, hergestellt sind.

7. Die Vorrichtung nach irgendeinem der vorigen Ansprüche, **dadurch gekennzeichnet, dass** die erwähnten elastisch komprimierbaren Platten (29, 30) aus einem Material hergestellt sind, das ein Elastizitätsmodul von zwischen 1 und 50 GPa, bevorzugt unter 20 GPa, noch besser unter 10 GPa, bevorzugt über 3 GPa, noch besser über 5 GPa hat.

8. Die Vorrichtung nach irgendeinem der vorigen Ansprüche, **dadurch gekennzeichnet, dass** die Bolzen (22, 23) einen Außendurchmesser von mindestens 30 mm, bevorzugt mindestens 40 mm und noch besser mindestens 45 mm haben.

9. Die Vorrichtung nach irgendeinem der vorigen Ansprüche, **dadurch gekennzeichnet, dass** die Unterseite des Stößels (3) mit einer Vertiefung (19) versehen ist und die Oberseite der oberen Formhälfte (13) mit einer übereinstimmenden Vertiefung (21) versehen ist, wobei der Montagemechanismus (15) ferner mit einem Ausrichtungsblock (20) versehen ist, angeordnet im durch die erwähnten Vertiefungen (19, 21) gebildeten Hohlraum, wobei sich die erwähnten Vertiefungen (19, 21) bevorzugt zentral sowohl in der Unterseite des Stößels (3) als auch in der Oberseite der oberen Formhälfte (13) befinden.

10. Die Vorrichtung nach irgendeinem der vorigen Ansprüche, **dadurch gekennzeichnet, dass** die erwähnte überragende Kante (27) durch eine Nut in der Außenwand (28) der oberen Formhälfte (13) gebildet ist.

11. Die Vorrichtung nach irgendeinem der vorigen Ansprüche, **dadurch gekennzeichnet, dass** die Vorrichtung einen weiteren Montagemechanismus (16) zum Montieren der unteren Formhälfte (14) an den Amboss (2) umfasst, wobei dieser weitere Montagemechanismus (16) die Merkmale des erwähnten Montagemechanismus (15) haben, wie definiert in irgendeinem der vorigen Ansprüche.

12. Die Vorrichtung nach irgendeinem der vorigen Ansprüche, **dadurch gekennzeichnet, dass** die Vorrichtung mit einem Zylinder-Kolben-Mechanismus (10, 11) ausgestattet ist, gekoppelt an den Stößel (3) und angeordnet, um den Stößel (3) zumindest nach oben zu bewegen.

13. Die Vorrichtung nach Anspruch 12, **dadurch gekennzeichnet, dass** die Vorrichtung ferner mit einer Pumpe (12) ausgestattet ist, um den Zylinder-Kolben-Mechanismus (10,11) anzutreiben.

14. Verfahren zum Installieren einer oberen Formhälfte (13) in der Vorrichtung nach irgendeinem der Ansprüche 1 bis 13, wobei das Verfahren Folgendes umfasst:
- Positionieren der oberen Formhälfte (13) an die Unterseite des Stößels (3);
- Positionieren der Montageplatten (24, 25) an die überragende Kante (27) der oberen Formhälfte (13);
- Einlegen der elastisch komprimierbaren Platten (29, 30) zwischen den Montageplatten (24, 25) und der Unterseite des Stößels (3);
- Befestigen der Montageplatten (24, 25) an der Unterseite des Stößels (3) mittels der Bolzen (22, 23); und
- Anziehen der Bolzen (22, 23).

15. Verfahren nach Anspruch 14, wobei die elastisch komprimierbaren Platten (29, 30) während des Anziehens der Bolzen (22, 23) zwischen 1 % und 50 %, bevorzugt zwischen 5 % und 30 % und noch besser zwischen 10 % und 20 % zusammengedrückt werden.

## Revendications

1. Dispositif de forgeage à chaud d'un article métallique, en particulier d'une bride, ledit dispositif étant pourvu des éléments suivants :
- une enclume (2) et un coulisseau (3) situés l'un en face de l'autre, dans lequel le coulisseau (3) est disposé pour se déplacer vers le haut et vers le bas par rapport à l'enclume (2) ;
- une moitié de matrice inférieure (14) monté sur l'enclume (2) et une moitié de matrice supérieure (13) monté sur le coulisseau (3) ; et
- un mécanisme de montage (15) pour monter la moitié de matrice supérieure (13) sur le coulisseau (3), ledit mécanisme de montage (15) étant pourvu des éléments suivants :
- un trou de boulon gauche et un trou de boulon droit (17, 18) dans le fond du coulisseau (3) ;
- un bord en saillie (27) de la paroi extérieure (28) de la moitié de matrice supérieure (13) ;
- une plaque de montage gauche et une plaque de montage droite (24, 25) qui sont situées à l'opposé l'une de l'autre et sensiblement parallèles au fond du coulisseau (3), dans lequel les côtés opposés des plaques de montage (24, 25) sont au moins partiellement en contact avec le bord en saillie (27), dans lequel chaque plaque de montage (24, 25) est pourvue d'au moins un trou de boulon (26), dans lequel le trou de boulon (26) de la plaque de montage gauche (24) est aligné avec le trou de boulon gauche (17) et le trou de boulon (26) de la plaque de montage droite (25) est aligné avec le trou de boulon droit (18) ; et
- un boulon gauche et un boulon droit (22, 23) pour monter les plaques de montage (24, 25) au fond du coulisseau (3) au moyen desdits trous de boulon (17, 18, 26),
**caractérisé en ce que** le mécanisme de montage (15) est en outre pourvu des éléments suivants :
- une plaque élastiquement compressible gauche (29) située à une distance de la moitié de matrice supérieure (13) et située entre la plaque de montage gauche (24) et le fond du coulisseau (3), dans lequel ledit boulon gauche (22) est situé dans l'espace ouvert entre la plaque élastiquement compressible gauche (29) et la moitié de matrice supérieure (13) ; et
- une plaque élastiquement compressible droite (30) située à une distance de la moitié de matrice supérieure (13) et située entre la plaque de montage droite (25) et le fond du coulisseau (3), dans lequel ledit boulon droit (23) est situé dans l'espace ouvert entre la plaque élastiquement compressible droite (30) et la moitié de matrice supérieure (13).

2. Dispositif selon la revendication 1, **caractérisé en ce que** chaque plaque de montage (24, 25) est pourvue de deux trous de boulon (26), dans lequel le trou de boulon gauche (17) fait partie d'une paire de trous de boulon gauches et le trou de boulon droit (18) fait partie d'une paire de trous de boulon droits, dans lequel les deux trous de boulon (26) sur la plaque de montage gauche (24) correspondent à ladite paire de trous de boulon gauche (17) dans le fond du coulisseau (3) et les deux trous de boulon (26) sur la plaque de montage droite (25) correspondent à ladite paire de trous de boulon droit (18) dans le fond du coulisseau (3).

3. Dispositif selon la revendication 2, **caractérisé en ce que** le fond du coulisseau (3) est pourvu de deux paires de trous de boulons gauches (17, 17') et de deux paires de trous de boulons droits (18, 18'), dans lequel, de préférence, les paires de trous de boulons les plus extérieurs (17', 18') ont un plus grand diamètre.

4. Dispositif selon l'une quelconque des revendications précédentes, **caractérisé en ce que** la superficie de la plaque élastiquement compressible gauche (29) est au moins 5 fois, de préférence au moins 10 fois, plus grande que la superficie dudit trou de boulon gauche (17, 17') et **en ce que** la superficie de la plaque élastiquement compressible droite (30) est au moins 5 fois, de préférence au moins 10 fois, plus grande que la superficie dudit trou de boulon droit (18, 18').

5. Dispositif selon l'une quelconque des revendications précédentes, **caractérisé en ce que** la distance la plus courte (A₂) entre le trou de boulon gauche (17) et l'extrémité extérieure de la plaque de montage gauche (24) est supérieure à la distance la plus courte (A₁) entre le trou de boulon gauche (17) et la moitié de matrice supérieure (13) et **en ce que** la distance la plus courte (A₂) entre le trou de boulon droit (18) et l'extrémité extérieure de la plaque de montage droite (25) est supérieure à la distance la plus courte (A₁) entre le trou de boulon droit (18) et la moitié de matrice supérieure (13).

6. Dispositif selon l'une quelconque des revendications précédentes, **caractérisé en ce que** lesdites plaques élastiquement compressibles (29, 30) sont en bois, de préférence en contreplaqué, ou en polyamide, de préférence en PA 66, en particulier en Ertalon^{®}.

7. Dispositif selon l'une quelconque des revendications précédentes, **caractérisé en ce que** lesdites plaques élastiquement compressibles (29, 30) sont constituées d'un matériau ayant un module d'élasticité compris entre 1 et 50 GPa, de préférence inférieur à 20 GPa, plus préférentiellement inférieur à 10 GPa, de préférence supérieur à 3 GPa, plus préférentiellement supérieur à 5 GPa.

8. Dispositif selon l'une quelconque des revendications précédentes, **caractérisé en ce que** les boulons (22, 23) ont un diamètre extérieur d'au moins 30 mm, de préférence d'au moins 40 mm et plus préférentiellement d'au moins 45 mm.

9. Dispositif selon l'une quelconque des revendications précédentes, **caractérisé en ce que** le fond du coulisseau (3) est pourvu d'un évidement (19) et le sommet de la moitié de matrice supérieure (13) est pourvu d'un évidement correspondant (21), dans lequel le mécanisme de montage (15) est en outre pourvu d'un bloc d'alignement (20) disposé dans la cavité formée par lesdits évidements (19, 21), dans lequel, de préférence, lesdits évidements (19, 21) sont situés au centre à la fois du fond du coulisseau (3) et du sommet de la moitié de matrice supérieure (13).

10. Dispositif selon l'une quelconque des revendications précédentes, **caractérisé en ce que** ledit bord en saillie (27) est formé par une rainure dans la paroi extérieure (28) de la moitié de matrice supérieure (13).

11. Dispositif selon l'une quelconque des revendications précédentes, **caractérisé en ce que** le dispositif comprend un autre mécanisme de montage (16) pour monter la moitié de matrice inférieure (14) sur l'enclume (2), ledit autre mécanisme de montage (16) ayant les caractéristiques dudit mécanisme de montage (15) tel que défini dans l'une quelconque des revendications précédentes.

12. Dispositif selon l'une quelconque des revendications précédentes, **caractérisé en ce que** le dispositif est pourvu d'un mécanisme cylindre-piston (10, 11) couplé au coulisseau (3) et conçu pour déplacer le coulisseau (3) au moins vers le haut.

13. Dispositif selon la revendication 12, **caractérisé en ce que** le dispositif est en outre pourvu d'une pompe (12) pour entraîner le mécanisme cylindre-piston (10, 11).

14. Procédé d'installation d'une moitié de matrice supérieure (13) dans le dispositif selon l'une quelconque des revendications 1 à 13, dans lequel le procédé comprend les étapes consistant à :
- positionner la moitié de matrice supérieure (13) contre le fond du coulisseau (3) ;
- positionner les plaques de montage (24, 25) contre le bord en saillie (27) de la moitié de matrice supérieure (13) ;
- placer les plaques élastiquement compressibles (29, 30) entre les plaques de montage (24, 25) et le fond du coulisseau (3) ;
- fixer les plaques de montage (24, 25) au fond du coulisseau (3) au moyen des boulons (22, 23) ; et
- serrer les boulons (22, 23).

15. Procédé selon la revendication 14, dans lequel, lors du serrage des boulons (22, 23), les plaques élastiquement compressibles (29, 30) sont comprimées entre 1 % et 50 %, de préférence entre 5 % et 30 % et plus préférentiellement entre 10 % et 20 %.
